(19) Europäisches Patentamt
European Patent Office
Office européen des brevets

(11) **EP 2 865 590 B1**

(12) **EUROPEAN PATENT SPECIFICATION**

(45) Date of publication and mention
of the grant of the patent:
**09.11.2016 Bulletin 2016/45**

(21) Application number: **13828451.8**

(22) Date of filing: **05.08.2013**

(51) Int Cl.:
**B63B 25/16** (2006.01)          **F28D 3/02** (2006.01)
**F28D 3/04** (2006.01)

(86) International application number:
**PCT/JP2013/071117**

(87) International publication number:
**WO 2014/024824 (13.02.2014 Gazette 2014/07)**

(54) **LIQUEFIED GAS VAPORIZATION DEVICE AND SHIP EQUIPPED WITH SUCH LIQUEFIED GAS VAPORIZATION DEVICE**

FLÜSSIGGASVERDAMPFUNGSVORRICHTUNG UND SCHIFF MIT EINER SOLCHEN FLÜSSIGGASVERDAMPFUNGSVORRICHTUNG

DISPOSITIF DE VAPORISATION DE GAZ LIQUÉFIÉ ET NAVIRE ÉQUIPÉ D'UN TEL DISPOSITIF DE VAPORISATION DE GAZ LIQUÉFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2012 JP 2012178275**

(43) Date of publication of application:
**29.04.2015 Bulletin 2015/18**

(73) Proprietors:
• **Mitsubishi Heavy Industries, Ltd.**
**Tokyo 108-8215 (JP)**
• **Sumitomo Precision Products Co., Ltd.**
**Hyogo 660-0891 (JP)**

(72) Inventors:
• **OKA, Masaru**
**Tokyo 108-8215 (JP)**
• **NAKAMICHI, Kenji**
**Tokyo 108-8215 (JP)**
• **TONOIKE, Yoshiro**
**Amagasaki-shi**
**Hyogo 660-0891 (JP)**

(74) Representative: **Henkel, Breuer & Partner Patentanwälte**
**Maximiliansplatz 21**
**80333 München (DE)**

(56) References cited:
JP-A- H08 110 181      JP-A- H10 103 896
JP-A- 2010 038 363     JP-U- H0 468 970
JP-U- H0 534 460       JP-U- H0 534 460
JP-U- S5 756 296       JP-U- S6 086 772
US-A- 6 164 247        US-A1- 2006 288 711
US-B1- 6 253 571

EP 2 865 590 B1

**Description**

{Technical Field}

The present invention relates to a liquefied-gas vaporizer and to a ship equipped with a liquefied-gas vaporizer that vaporizes liquefied gas.

{Background Art}

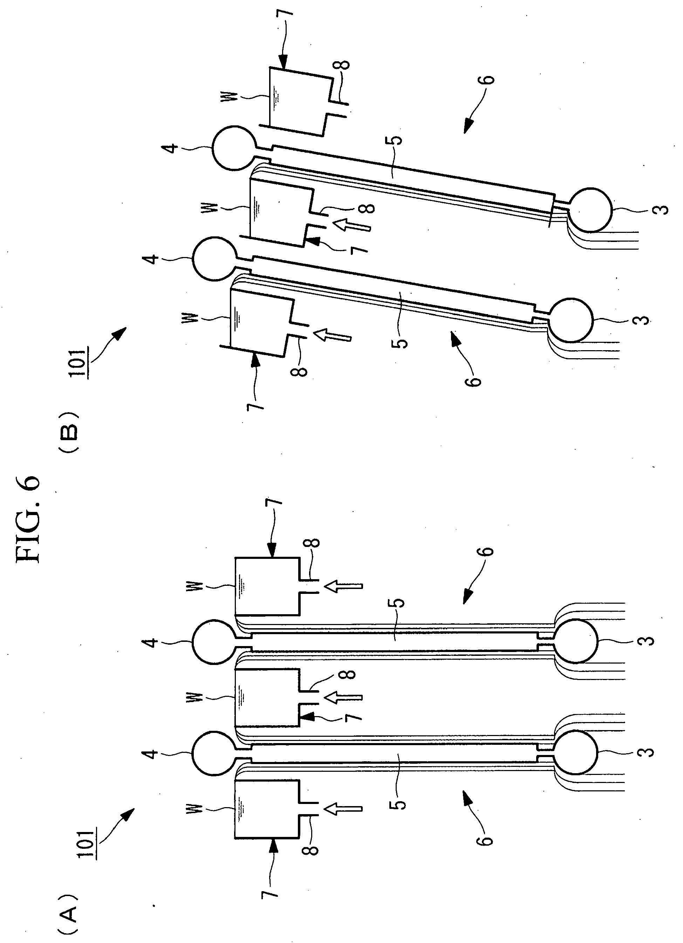

JP 2011-112294A discloses a general Open-Rack-type liquefied-gas vaporizer (ORV; Open-Rack-type Vaporizer) in the related art. As shown in Fig. 6(A), this liquefied-gas vaporizer 101 is provided with a plurality of heat exchange panels 6 in which numerous heat transfer pipes 5, extending in the vertical direction, are arranged in parallel between bottom-portion header pipes 3 and top-portion header pipes 4 that are disposed horizontally and parallel to each other with a distance of, in the vertical direction, several meters therebetween. Troughs (weirs) 7 are disposed at both sides of the top portions of the individual heat exchange panels 6 in close proximity thereto. The troughs 7 make heating-medium fluid W (generally, seawater) supplied from a water supply nozzle 8 to overflow so as to flow over the heat exchange panels 6. At the interiors of the heat exchange panels 6, low-temperature liquefied gas (LNG, LPG, or the like) supplied to the bottom-portion header pipes 3 is gasified by undergoing heat exchange with the heating-medium fluid W applied onto the exteriors of the heat transfer pipes 5 while flowing upward in the interiors of the heat transfer pipes 5, is made to flow into the top-portion header pipes 4 in the form of room-temperature gaseous gas, and is supplied to required portions such as a city gas line, a power generation facility, and so forth.

JP H05-34460U discloses an open-rack type gasifier comprising a trough and a panel-like heat exchanger.

US 6,253,571B1 describes a falling film heat exchanger which has a primary distribution duct arranged above a plurality of rectangular secondary distribution trays of uniform size which are arranged in series and are surrounded by peripheral walls of uniform height. The distribution trays have liquid dripping holes formed in the lower bottom surfaces of the distribution trays.

US 2006/0288711A1 discloses another type of liquefied-natural gas gasifier configured to be installed on an offshore structure and which includes a water passage into which seawater flows, a LNG passage provided inside the water passage and configured to pass the LNG and that allows heat exchange between the seawater and the LNG, and a bubble generating unit configured to generate bubbles of air into the seawater in the water passage. The water passage has an inlet port from where the seawater is taken in and a discharge port from where the air and the seawater are discharged. This concept is proposed as an alternative to the so-called "open-rack type LNG gasifier".

{Summary of Invention}

{Technical Problem}

In the case in which the above-described Open-Rack-type liquefied-gas vaporizer is installed in locations where rolling and tilt occur due to waves and wind, such as on liquefied-gas transport ships (LNG ships) or offshore floating units, including FSRUs (Floating Storage and Regasification Units) and FPSOs (Floating Production, Storage and Offloadings), because the entire liquefied-gas vaporizer 101 tilts as shown in Fig. 6(B), it is not possible to make the heating-medium fluid W evenly overflow from both sides of the troughs 7. Because of this, the heating-medium fluid W is made to flow only on one surface of the heat exchange panels 6 (heat transfer pipes 5), and there is a risk of not only failing to achieve a predetermined vaporizing performance but also resulting in damage to the heat exchange panels 6 due to the occurrence of thermal strain localization. Therefore, at locations where rolling occurs, like on ships and offshore floating units, it has not been possible to employ the Open-Rack-type liquefied-gas vaporizers, and there has been no other choice but to employ cascading-type or water (involving steam as its vapor)-heating-type liquefied-gas vaporizers, which are more complicated and inferior in terms of operability and maintainability.

The present invention is made in light of the above-described circumstances, and an object thereof is to make it possible to install an Open-Rack-type liquefied-gas vaporizer having a simple configuration and high operability at a location where rolling and tilt occur, such as on a ship or an offshore floating unit.

{Solution to Problem}

In order to achieve the above-described object, the present invention employs a liquefied-gas vaporizer with the features of claim 1 and a ship provided with such a liquefied-gas vaporizer.

A liquefied-gas vaporizer according to the preamble of claim 1 includes a heat exchange panel that gasifies liquefied gas at an interior thereof by means of heat exchange; and a trough disposed adjacent to the heat exchange panel, wherein the liquefied gas is subjected to the heat exchange by making a heating-medium fluid overflow from an overflow opening of the trough and by making the heating-medium fluid flow on a surface of the heat exchange panel, and wherein the liquefied-gas vaporizer has a configuration in which a vertical height from a bottom plate to an edge portion of the trough that does not face the heat exchange panel is set so as to be greater than a vertical height from the bottom plate to an edge portion of the trough that faces the heat exchange panel.

With the liquefied-gas vaporizer having the above-described configuration, even if the entire liquefied-gas vaporizer is tilted toward the trough when viewed from the heat exchange panel, until the tilt angle thereof reaches a tilt angle at which the vertical height of the edge portion, which is a part of the overflow opening of the trough and faces the heat exchange panel, matches the vertical height of the edge portion that does not face the heat exchange panel, it is possible to continue to apply the heating-medium fluid onto the heat exchange panel from the trough, and thus, it is possible to achieve good gasification of the liquefied gas.

By doing so, even if the liquefied-gas vaporizer is installed in a location where rolling occurs due to waves and wind, such as on a ship or an offshore floating unit, the liquefied-gas vaporizer can be operated so long as the rolling angle thereof is within the predetermined range. Therefore, it is possible to install an Open-Rack-type liquefied-gas vaporizer having a simple configuration and high operability at a location where rolling occurs, such as on a ship or an offshore floating unit.

In the liquefied-gas vaporizer having the above-described configuration, when a horizontal distance between the edge portion that faces the heat exchange panel and the edge portion that does not face the heat exchange panel is C, when a maximum tilt angle of the liquefied-gas vaporizer in the C-direction is $\theta$, when a distance from the bottom plate to the edge portion that faces the heat exchange panel is L1, and when a distance from the bottom plate to the edge portion that does not face the heat exchange panel is L2, L1 and L2 are preferably set so that the following expression is achieved:

$$L2 - L1 \geq C \cdot \tan \theta.$$

By doing so, by appropriately setting a difference between the distance from the bottom plate of the trough to the edge portion that faces the heat exchange panel and the distance from the bottom plate of the trough to the edge portion that does not face the heat exchange panel in accordance with tilt angles expected for the liquefied-gas vaporizer, it is possible to supply the heating-medium fluid to the heat exchange panel from the trough even if the liquefied-gas vaporizer is maximally tilted, and thus, it is possible to install an Open-Rack-type liquefied-gas vaporizer in a location where tilt and rolling occur.

In the liquefied-gas vaporizer according to the invention an interior of the trough is partitioned by a plurality of baffle plates into a plurality of water supply sections that are horizontally arranged in a longitudinal direction of the trough, wherein the height of the plurality of baffle plates is set to a height that it is lower than a surface of the heating-medium fluid in the trough when the trough is not tilted the liquefied-gas vaporizer further comprising a distribution water nozzle for evenly distributing the heating-medium fluid to the plurality of water supply sections.

Since such a configuration is employed, even if the liquefied-gas vaporizer rolls, making the heights at the two ends of the trough different, the heating-medium fluid stored at the interior of the trough is prevented from being entirely collected at one end of the trough. Because of this, the heating-medium fluid is uniformly distributed over the entire width (entire surface) of the heat exchange panel from the individual water supply sections, and thus, it is possible to achieve good gasification of the liquefied gas at the interior of the heat exchange panel.

In the liquefied-gas vaporizer having the above-described configuration, it is preferable that the distribution water nozzle has a pipe-shape that passes through the plurality of water supply sections so as to extend in the longitudinal direction of the trough, and that has water supply ports that respectively open at interiors of the individual water supply sections.

Preferably, in the liquefied-gas vaporizer having the above-described configuration, the two overflow openings for individually making the heating-medium fluid flow on each of the heat exchange panels that face each other, are disposed adjacent to each other in the trough installed between the two heat exchange panels that face each other, a partitioning plate that partitions the two overflow openings is provided, and a top edge portion of the partitioning plate is the edge portion that does not face the heat exchange panel and that is shared by the two overflow openings.

In the case in which such a configuration is employed, in the trough installed between the two heat exchange panels that face each other, the top end portion of the partitioning plate that partitions the two overflow openings that are disposed adjacent to each other is the edge portion that does not face the heat exchange panel and that is shared by the overflow openings. Because of this, it is possible to make the heating-medium fluid evenly flow over the two heat exchange panels that face each other by providing the two overflow openings, while keeping the structure of the trough simple.

{Advantageous Effects of Invention}

As described above, a ship equipped with a liquefied-gas vaporizer according to the present invention is equipped with an inexpensive Open-Rack-type liquefied-gas vaporizer that can be installed in a location where rolling and tilt occur. Accordingly, as compared with a case in which a ship is equipped with an offshore liquefied-gas vaporizer in the related art, it is possible to considerably decrease the cost of the ship, and it is also possible to enhance the operability and maintainability of the liquefied-gas vaporizer.

In addition, with the liquefied-gas vaporizer according to the present invention, it is possible to install an Open-Rack-type liquefied-gas vaporizer having a simple configuration and high operability and maintainability in a location where rolling and tilt occur, such as on a ship and an offshore floating unit, thereby increasing the applicability thereof.

{Brief Description of Drawings}

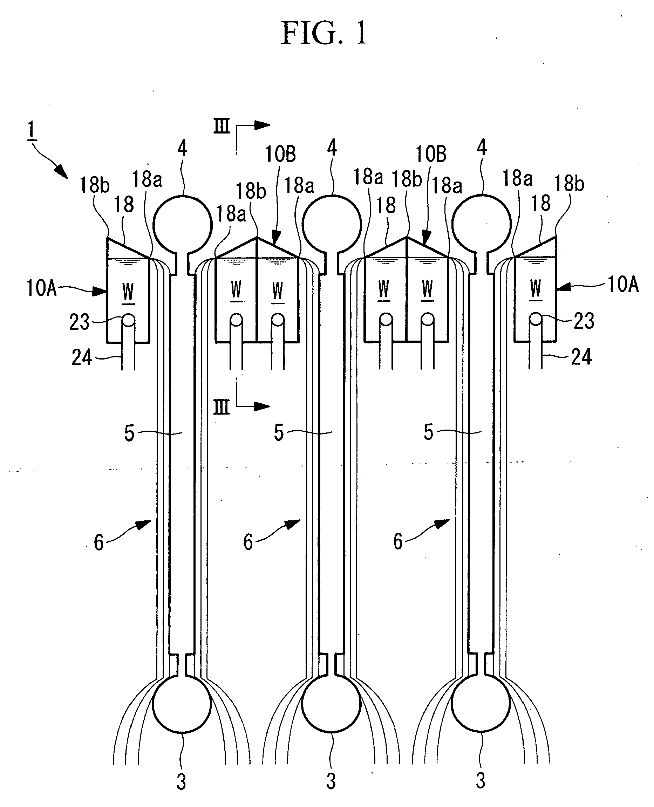

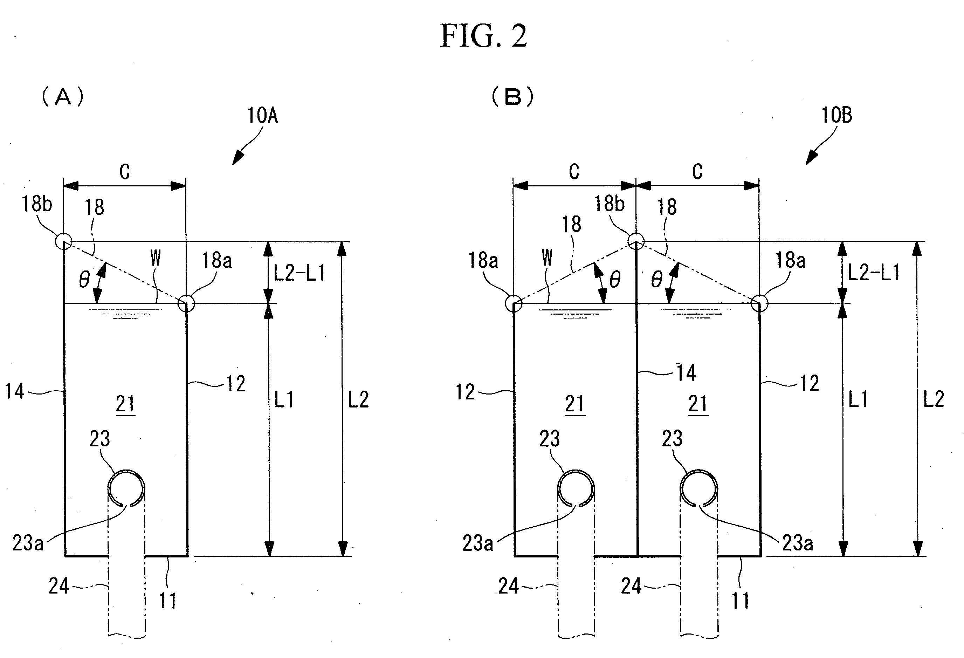

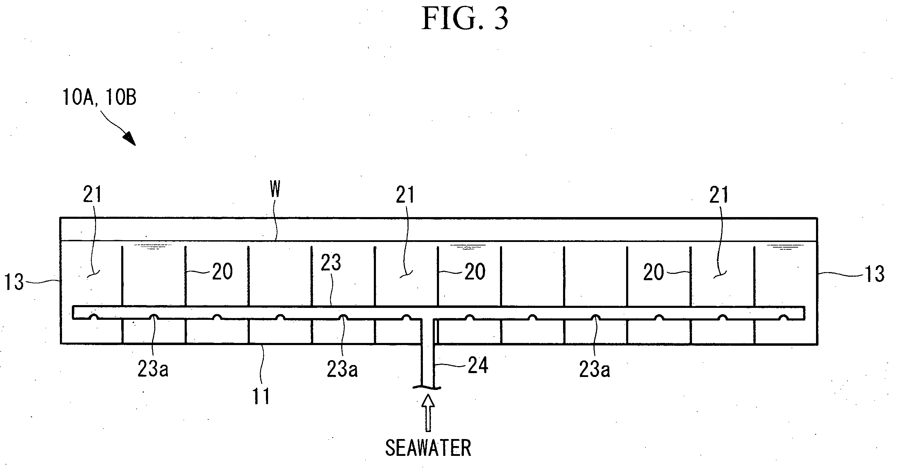

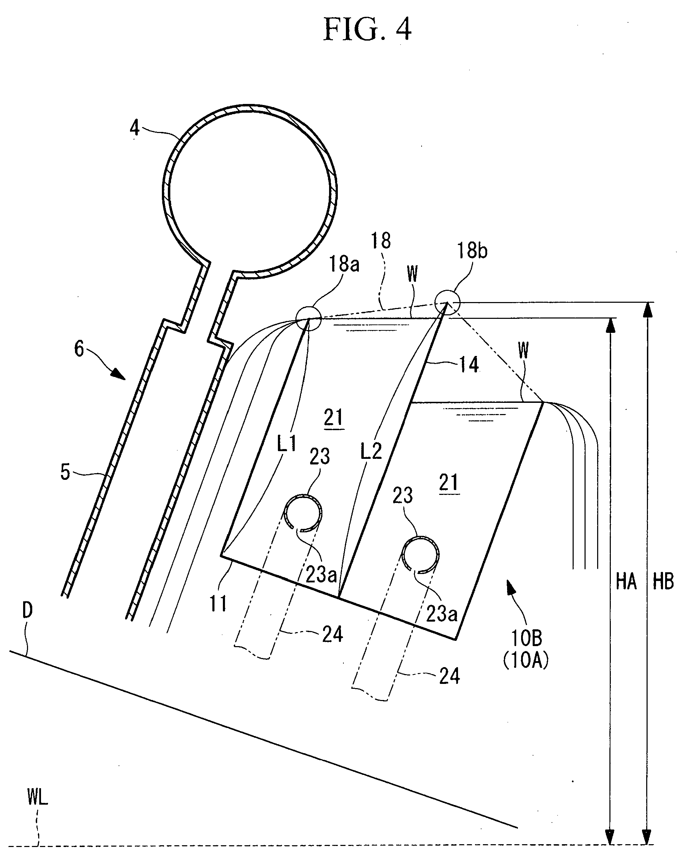

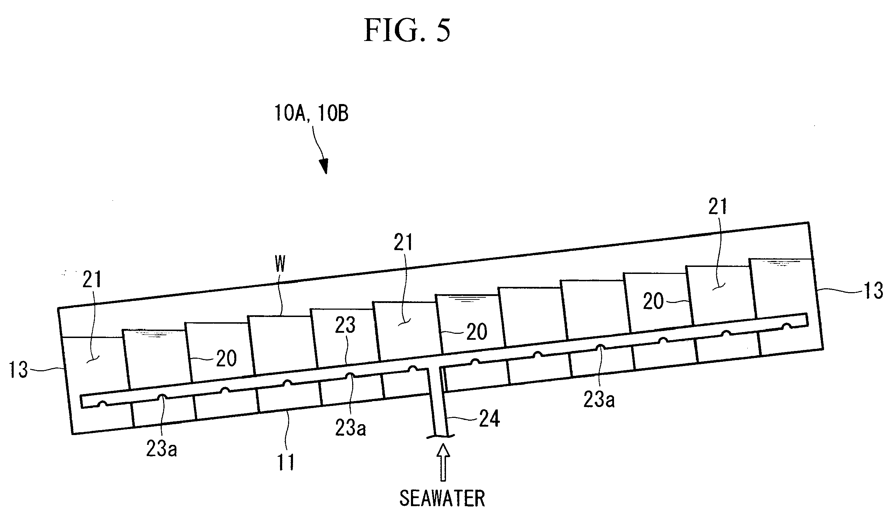

{Fig. 1} Fig. 1 is a longitudinal sectional view of a liquefied-gas vaporizer according to an embodiment of the present invention.
{Fig. 2} Fig. 2 is a diagram showing an enlarged view of troughs in Fig. 1, where Fig. 2(A) shows troughs on both outer sides of heat exchange panels, and Fig. 2(B) shows troughs that are positioned between the heat exchange panels.
{Fig. 3} Fig. 3 is a longitudinal sectional view along the longitudinal direction of the trough, taken along line III-III in Fig. 1.
{Fig. 4} Fig. 4 is a longitudinal sectional view showing a state in which the liquefied-gas vaporizer is tilted in a lateral direction.
{Fig. 5} Fig. 5 is a longitudinal sectional view of the trough showing a state in which the liquefied-gas vaporizer is tilted in a longitudinal direction.
{Fig. 6} Fig. 6 is a longitudinal sectional view of a liquefied-gas vaporizer of the related art (A) when it is not tilted and (B) when it is tilted.

{Description of Embodiment}

An embodiment of the present invention will be described below with reference to the drawings.
Fig. 1 is a longitudinal sectional view of a liquefied-gas vaporizer according to an embodiment of the present invention. This liquefied-gas vaporizer 1 is installed in, for example, a liquefied-gas transport ship, and is an apparatus that changes the liquefied gas into gaseous gas by subjecting it to heat exchange with seawater (heating-medium fluid). In this liquefied-gas vaporizer 1, bottom-portion header pipes 3, top-portion header pipes 4, heat transfer pipes 5, and heat exchange panels 6 have the same configurations as those in the liquefied-gas vaporizer 101 in the related art shown in Figs. 6(A) and (B). Note that Fig. 1 shows an example in which three heat exchange panels 6 are provided.
Troughs 10A are provided at both outer sides of the three heat exchange panels 6, and troughs 10B are provided at positions located between the heat exchange panels 6. As also shown in Figs. 2(A) and (B) and Fig. 3, the troughs 10A and 10B are formed like weirs (box shapes) that horizontally extend in the longitudinal direction of the heat exchange panels 6, and each of which is provided with a bottom plate 11, side plates 12 that face each other so as to be parallel to the surfaces of the heat exchange panels 6, a partitioning plate 14, and a pair of end plates 13 that are provided at both ends of the troughs 10A and 10B in the longitudinal direction thereof so as to face each other.
As shown in Fig. 2(B), in the trough 10B that is positioned between two heat exchange panels 6, the vertical partitioning plate 14 is provided at an intermediate position between the pair of side plates 12 that face each other. Because of this, the longitudinal cross-sectional shape of the trough 10B is shaped like two troughs 10A connected together back-to-back (protruding pentagon having two vertical longitudinal sides). In addition, in the trough 10A, one side plate 12 and one partitioning plate 14 face each other.
The tops of the troughs 10A and 10B are open and serve as overflow openings 18. The overflow openings 18 open with a tilt angle 8 tilting downward toward the adjacent heat exchange panels 6. In the trough 10B, two overflow openings 18 are arranged adjacent to each other so as to individually make the seawater W flow over the heat exchange panels 6 on both sides thereof, and the partitioning plate 14 therebetween divides the two overflow openings 18.
As shown in Figs. 2(A) and (B), the overflow openings 18 of the troughs 10A and 10B have heat-exchange-panel edge portions 18a positioned closer to the heat exchange panels 6 (edge portions that face the heat exchange panels) and heat-exchange-panel opposite edge portions 18b positioned on the opposite side away from the heat exchange panels 6 with the heat-exchange-panel edge portions 18a, the heat-exchange-panel opposite edge portions 18b are located between the heat-exchange-panel edge portions (edge portions that do not face the heat exchange panels). The heat-exchange-panel edge portions 18a are edge portions over which the seawater W flows toward the exterior when flowing onto the heat exchange panels 6 by overflowing from the overflow openings 18.
In the trough 10A, the heat-exchange-panel edge portion 18a corresponds to the top edge portion of the side plate 12 that faces the heat exchange panel 6, and the heat-exchange-panel opposite edge portion 18b corresponds to the top edge portion of the partitioning plate 14 that does not face the heat exchange panel 6. In addition, in the trough 10B, the heat-exchange-panel edge portions 18a correspond to the top edge portions of the individual side plates 12 at both sides, and the top edge portion of the partitioning plate 14 corresponds to the heat-exchange-panel opposite edge portion 18b that is shared between the two overflow openings 18.
Then, in the troughs 10A and 10B, assuming that the distance from the bottom plate 11 to the heat-exchange-panel edge portion 18a of the overflow opening 18 (side plate 12) is L1 and that the distance from the bottom plate 11 to the heat-exchange-panel opposite edge portion 18b of the overflow opening 18 (partitioning plate 14) is L2, the heights of the individual side plates 12 and the partitioning plates 14 are set so that L2 is greater than L1.
In addition, assuming that the distance between each of the pair of side plates 12, which are substantially perpendicular to the bottom plate 11, and the partitioning plate 14 is C and that a maximum tilt angle of the entire liquefied-gas vaporizer 1 (i.e., ship) in the C-direction (lateral direction) is θ, the heights L1 and L2 are set so that the expression L2 - L1 ≥ C·tan θ can be achieved. Because of this, even if the liquefied-gas vaporizer 1 is tilted to the maximum tilt angle θ, the length L1 from the bottom plate 11 to the heat-exchange-panel edge portion 18a is kept less than the length L2 from the bottom plate 11 to the heat-exchange-panel opposite edge portion 18b.

On the other hand, as shown in Fig. 3, in the troughs 10A and 10B, the space between the side plate 12 and the partitioning plate 14 that face each other or the space between the side plates 12 that face each other is partitioned by a plurality of baffle plates 20, thus forming a plurality of (twelve in this case) water supply sections 21 so as to be horizontally arranged in the longitudinal direction inside the troughs 10A and 10B. The height of the baffle plates 20 is a height that is slightly lower than the water surface of the seawater W when the troughs 10A and 10B are not tilted. By doing so, the water levels at the individual water supply sections 21 can be made uniform. In addition, the space between the baffle plates 20 need not necessarily be equal.

Furthermore, a distribution water nozzle 23 that evenly distributes the seawater W to the plurality of water supply sections 21 is provided. This distribution water nozzle 23 is formed in a pipe-shape that passes through the plurality of water supply sections 21 (baffle plates 20) so as to extend in the longitudinal direction of the troughs 10A and 10B and has a plurality of water supply ports 23a that are open at the interiors of the individual water supply sections 21. A water supply nozzle 24 is connected, from below, to the distribution water nozzle 23 at the vicinity of an intermediate portion thereof, and the seawater W supplied from the water supply nozzle 24 is distributed to the individual water supply sections 21 from the individual water supply ports 23a of the distribution water nozzle 23.

The liquefied-gas vaporizer 1 configured as described above is operated as below.

When the liquefied-gas vaporizer 1 shown in Fig. 1 is not tilted, the seawater W supplied to the troughs 10A and 10B from the water supply nozzles 24 via the distribution water nozzles 23 overflows from the overflow openings 18, thus the seawater W is made to flow over the heat exchange panels 6. Because of this, low-temperature liquefied gas supplied to the bottom-portion header pipes 3 is gasified when flowing upward inside the heat transfer pipes 5 by undergoing heat exchange with the seawater W, thus flowing to the top-portion header pipes 4 in the form of room-temperature gaseous gas to be supplied to required portions located further downstream therefrom.

In addition, as shown in Fig. 4, the distance from the bottom plate 11 to the heat-exchange-panel opposite edge portion 18b (L2 in Fig. 2) is set so as to be greater than the distance from the bottom plate 11 to the overflow opening 18 (L1 in Fig. 2) even if the liquefied-gas vaporizer 1 is tilted in the lateral direction (thickness direction of the heat exchange panel 6). Because of this, until reaching a tilt angle at which the length L1 matches the length L2, that is, a tilt angle that exceeds the maximum tilt angle θ, it is possible to apply the seawater W onto the heat exchange panels 6 from the troughs 10A and 10B, and thus, it is possible to achieve good gasification of the liquefied gas.

When the liquefied-gas vaporizer 1 is installed in a ship, in the troughs 10A and 10B, the length (L1) from the bottom plate 11 to the heat-exchange-panel edge portion 18a of the overflow opening 18 and the length (L2) from the bottom plate 11 to the heat-exchange-panel opposite edge portion 18b should be set so that, as shown in Fig. 4, a height HA in the vertical direction from a reference line which extends in the horizontal direction, for example, a water line WL, to the heat-exchange-panel edge portion 18a is kept lower than a height HB in the vertical direction from the water line WL to the heat-exchange-panel opposite edge portion 18b until the rolling angle of the ship reaches a maximum allowable angle (for example, 15°).

Because of this, even when the liquefied-gas vaporizer 1 is installed in a liquefied-gas transport ship, as described in this embodiment, or when the liquefied-gas vaporizer 1 is installed in a location where rolling occurs due to waves and wind, like on an offshore floating unit, the liquefied-gas vaporizer 1 can be continued to be kept in operation so long as the rolling angle of the liquefied-gas vaporizer 1 is within a predetermined range. Therefore, it is possible to install an Open-Rack-type liquefied-gas vaporizer 1 having a simple configuration and high operability at a location where rolling occurs, such as on a ship or an offshore floating unit.

In addition, L1 and L2 are set so that the expression L2 - L1 ≥ C·tan θ can be achieved, assuming that the distance between the heat-exchange-panel edge portion 18a and the heat-exchange-panel opposite edge portion 18b in plan view is C and that the maximum tilt angle of the entire liquefied-gas vaporizer 1 in the C-direction is θ. Because of this, even if the liquefied-gas vaporizer 1 is tilted to the maximum tilt angle θ, the seawater W can be supplied to the heat exchange panels 6 from the troughs 10A and 10B.

Furthermore, by partitioning the interiors of the troughs 10A and 10B with the plurality of baffle plates 20, the plurality of water supply sections 21 that are horizontally arranged in the longitudinal direction thereof are formed, and the distribution water nozzles 23 that evenly distribute the seawater W to the plurality of water supply sections 21 are also provided. Because of this, even if the liquefied-gas vaporizer 1 rolls in the longitudinal direction, making the heights at the two ends of the troughs 10A and 10B different, as shown in Fig. 5, because the seawater W is held at the interiors of all water supply sections 21, the seawater W in the troughs 10A and 10B is prevented from entirely being collected at one end of the troughs 10A and 10B. Because of this, the seawater W is uniformly distributed over the entire width (entire surface) of the heat exchange panels 6 from the individual water supply sections 21, and thus, it is possible to achieve good gasification of the liquefied gas at the interiors of the heat exchange panels 6.

The distribution water nozzle 23 has a pipe-shape that passes through the plurality of water supply sections 21 (baffle plates 20), extending in the longitudinal direction of the troughs 10A and 10B, and that has the water supply ports 23a that open at the interiors of the individual water supply sections 21. Because of this, the seawater W can evenly be distributed to all water supply sections 21 while keeping the configuration of the distribution water nozzle 23 simple.

In the trough 10B installed between two heat exchange panels 6 that face each other, the two overflow openings 18 that individually make the seawater W flow over each of the heat exchange panels 6 that face each other are disposed adjacent to each other, and the partitioning plate 14 that partitions these two overflow openings 18 is also provided therebetween. The top edge portion of the partitioning plate 14 corresponds to the heat-exchange-panel opposite edge portion 18b that is shared between the two overflow openings 18. Because of this, it is possible to make the seawater W evenly flow on both of the two heat exchange panels 6 that face each other by providing the two overflow openings 18, while keeping the structure of the trough 10B extremely simple.

Thus, by installing the thus-configured liquefied-gas vaporizer 1 in a liquefied-gas transport ship, so long as the rolling angle is within the predetermined range, the liquefied gas can be gasified by means of an Open-Rack-type liquefied-gas vaporizer 1 having a simple configuration and high operability even when the hull rolls due to waves and wind. Therefore, as compared with the case of installing a cascading-type or a water (involving steam as its vapor)-heating-type liquefied-gas vaporizer, which has conventionally been employed for offshore use, it is possible to considerably lower the cost of the ship.

Although the above-described embodiment has been described in terms of a liquefied-gas vaporizer to be installed in a ship, such as a liquefied-gas transport ship or the like, it may be a liquefied-gas vaporizer to be installed in an offshore floating unit, such as an FSRU, an FPSO, or the like.

Furthermore, the numbers of the heat exchange panels 6 and the troughs 10A and 10B may differ from those in this embodiment, and, additionally, the heating-medium fluid need not only be seawater but may also be lake water, river water, or the like.

{Reference Signs List}

1 liquefied-gas vaporizer
5 heat transfer pipe
6 heat exchange panel
10A, 10B trough
11 bottom plate

14 partitioning plate
18 overflow opening
18a heat-exchange-panel edge portion (edge portion that faces heat exchange panel)
18b heat-exchange-panel opposite edge portion (edge portion that does not face heat exchange panel)
20 baffle plate
21 water supply section
23 distribution water nozzle
23a water supply port
24 water supply nozzle
HA height of trough in vertical direction at edge portion that faces heat exchange panel
HB height of trough in vertical direction at a edge portion that does not face heat exchange panel
L1 distance from trough bottom plate to heat-exchange-panel edge portion
L2 distance from trough bottom plate to heat-exchange-panel opposite edge portion
C horizontal distance between heat-exchange-panel edge portion and heat-exchange-panel opposite edge portion
W seawater (heating-medium fluid)
WL water line
θ maximum tilt angle of entire liquefied-gas vaporizer

**Claims**

1. A liquefied-gas vaporizer (1) comprising:

   a heat exchange panel (6) arranged to gasify liquefied gas at an interior thereof by means of heat exchange; and
   a trough (10A,10B) disposed adjacent to the heat exchange panel (6),

   wherein the liquefied gas is subjected to the heat exchange by making a heating-medium fluid (W) overflow from an overflow opening (18) of the trough (10A, 10B) and by making the heating-medium fluid (W) flow on a surface of the heat exchange panel (6), and

   wherein the liquefied-gas vaporizer (1) has a configuration in which a vertical height (L2) from a bottom plate (11) to an edge portion (18b) of the trough (10A, 10B) that does not face the heat exchange panel (6) is set so as to be greater than a vertical height (L1) from the bottom plate (11) to an edge portion (18a) of the trough (10A, 10B) that faces the heat exchange panel (6),

   **characterized in that**
   an interior of the trough (10A,10B) is partitioned by a plurality of baffle plates (20) into a plurality of water supply sections (21) that are horizontally arranged in a longitudinal direction of the trough (10A,10B), wherein the height of the plurality of baffle plates (20) is set to a height that it is lower than a surface of the heating-medium fluid (W) in the trough (10A, 10B) when the trough (10A, 10B) is not tilted, and wherein the liquefied-gas vaporizer (1) further comprises a distribution water nozzle (23) for evenly distributing the heating-medium fluid (W) to the plurality of water supply sections (21).

2. The liquefied-gas vaporizer (1) according to claim 1, wherein, when a horizontal distance between the edge portion (18a) that faces the heat exchange panel (6) and the edge portion (18b) that does not face the heat exchange panel (6) is C, when a maximum tilt angle of the liquefied-gas vaporizer in the C-direction is θ, when the vertical height from the bottom plate (11) to the edge portion (18a) that faces the heat exchange panel (6) is L1, and when the vertical height from the bottom plate (11) to the edge portion (18b) that does not face the heat exchange panel (6) is L2, L1 and L2 are set so that the following expression is achieved:

$$L2 - L1 \geq C \cdot \tan \theta.$$

3. The liquefied-gas vaporizer (1) according to claim 1 or 2, wherein the distribution water nozzle (23) has a pipe-shape that passes through the plurality of water supply sections (21) so as to extend in the longitudinal direction of the trough (10A, 10B), and that has water supply ports (23a) that respectively open at interiors of the individual water supply sections (21).

4. The liquefied-gas vaporizer (1) according to claim 3, wherein the distribution water nozzle (23) passes through the baffle plates (20) below the surface of the heating-medium fluid (W) in the trough (10A, 10B) when the trough (10A, 10B) is not tilted.

5. The liquefied-gas vaporizer (1) according to any one of claims 1 to 4, wherein two of the overflow openings (18) for individually making the heating-medium fluid (W) flow on each of two heat exchange panels (6) that face each other are disposed adjacent to each other in the trough (10A, 10B) installed between the two heat exchange panels (6) that face each other, a partitioning plate (14) that partitions the two overflow openings (18) is provided, and a top edge portion (18b) of the partitioning plate (14) is the edge portion (18b) that does not face the heat exchange panel (6) and that is shared by the two overflow openings (18).

6. A ship equipped with a liquefied-gas vaporizer (1) configured according to any one of claims 1 to 5.

**Patentansprüche**

1. Ein Flüssiggasverdampfer (1) mit:

einer Wärmeaustauschpaneele (6) die angeordnet ist, um Flüssiggas in einem Inneren davon mittels Wärmetausch zu verdampfen, und einem Trog (10A, 10B), der angrenzend an die Wärmetauschpaneele (6) angeordnet ist,

wobei das Flüssiggas dem Wärmetausch unterzogen wird, indem ein Heizmediumfluid (W) von einer Überströmöffnung (18) des Trogs (10A, 10B) überströmt und indem das Heizmediumfluid (W) an bzw. auf einer Oberfläche der Wärmetauschpaneele (6) strömen gelassen wird, und
wobei der Flüssiggasverdampfer (1) eine Konfiguration besitzt, bei der eine vertikale Höhe (L2) von einer Bodenplatte (11) zu einem Randabschnitt (18b) des Trogs (10A, 10B), der der Wärmetauschpaneele (6) nicht zugewandt ist, so eingestellt ist, dass sie größer ist als eine vertikal Höhe (L1) von der Bodenplatte (11) zu einem Randabschnitt (18a) des Trogs (10A, 10B), der der Wärmetauschpaneele (6) zugewandt ist,
**dadurch gekennzeichnet, dass**
ein Inneres des Trogs (10A, 10B) durch eine Vielzahl von Prallplatten (20) in eine Vielzahl von Wasserzuführabschnitte (21) unterteilt ist, die horizontal in einer Längsrichtung des Trogs (10A, 10B) angeordnet sind,
wobei die Höhe der Vielzahl von Prallplatten (20) auf eine Höhe eingestellt ist, die niedriger ist als eine Oberfläche des Heizmediumfluids (W) in dem Trog (10A, 10B), wenn der Trog (10A, 10B) nicht geneigt bzw. gekippt ist, und
wobei der Flüssiggasverdampfer (1) ferner eine Wasserverteilungsdüse (23) zum gleichmäßigen Verteilen des Heizmediumfluids (W) zu der Vielzahl von Wasserzuführabschnitten (21) aufweist.

2. Der Flüssigkeitsverdampfer (1) gemäß Anspruch 1, wobei, wenn eine horizontale Distanz zwischen dem Randabschnitt (18a), der der Wärmetauschpaneele (6) zugewandt ist, und dem Randabschnitt (18b), der der Wärmetauschpaneele (6) nicht zugewandt ist, C beträgt, wenn ein maximaler Kipp- bzw. Neigungswinkel des Flüssiggasverdampfers in der C-Richtung beträgt, wenn die vertikale Höhe von der Bodenplatte (11) zu dem Randabschnitt (18a), der der Wärmetauschpaneele (6) zugewandt ist, L1 beträgt, und wenn die vertikale Höhe von der Bodenplatte (11) zu dem Randabschnitt (18b), der der Wärmetauschpaneele (6) nicht zugewandt ist, L2 beträgt, L1 und L2 so eingestellt sind, dass der folgende Ausdruck erfüllt ist:

$$L2 - L1 \geq C*\tan\theta.$$

3. Der Flüssiggasverdampfer (1) gemäß Anspruch 1 oder 2, wobei die Wasserverteilungsdüse (23) eine Rohrform besitzt, die durch die Vielzahl von Wasserzuführabschnitten (21) so verläuft, dass sie sich in der Längsrichtung des Trogs (10A, 10B) erstreckt, und Wasserzuführanschlüsse (23a) besitzt, die sich jeweils im Inneren der einzelnen Wasserzuführabschnitte (21) öffnen.

4. Der Flüssiggasverdampfer (1) gemäß Anspruch 3, wobei die Wasserverteilungsdüse (23) durch die Prallplatten (20) unter der Oberfläche des Heizmediumfluids (W) in dem Trog (10A, 10B) verläuft, wenn der Trog (10A, 10B) nicht geneigt bzw. gekippt ist.

5. Der Flüssiggasverdampfer (1) gemäß einem der Ansprüche 1 bis 4, wobei zwei der Überströmsöffnungen (18) zum jeweiligen Strömenlassen des Heizmediumfluids (W) an bzw. auf jeder von zwei Wärmetauschpaneelen (6), die einander zugewandt sind, nebeneinander in dem Trog (10A, 10B), der zwischen den zwei Wärmetauschpaneelen (6) die einander zugewandt sind, installiert ist, angeordnet sind, wobei eine Trennplatte (14), die die zwei Überströmöffnungen (18) unterteilt, vorgesehen ist, und wobei ein oberer Randabschnitt (18b) der Trennplatte (14) der Randabschnitt (18b) ist, der der Wärmetauschpaneele (6) nicht zugewandt ist und der von den zwei Überströmöffnungen (18) geteilt wird.

6. Ein Schiff, das mit dem Flüssigkeitsverdampfer (1) gemäß einem der Ansprüche 1 bis 5 ausgestattet ist.

**Revendications**

1. Vaporisateur (1) de gaz liquéfié comprenant :

un panneau (16) d'échange de chaleur agencé pour gazéifier du gaz liquéfié en son intérieur au moyen d'un échange de chaleur et une auge (10A, 10B) disposée au voisinage du panneau (6) d'échange de chaleur,

dans lequel le gaz liquéfié est soumis à l'échange de chaleur en faisant déborder un fluide (W) de milieu de chauffage d'une ouverture (18) de débordement de l'auge (10A, 10B) et en faisant s'écouler le fluide (W) de milieu de chauffage sur une surface du panneau (6) d'échange de chaleur et dans lequel le vaporisateur (1) de gaz liquéfié a une configuration, dans laquelle une hauteur (L2) verticale d'une plaque (11) de fond à une partie (18b) de bord de l'auge (10A, 10B), qui ne fait pas face au panneau (6) d'échange de chaleur, est fixée de manière à être plus grande qu'une hauteur (L1) verticale de la plaque (11) de fond à une partie (18a) de bord de l'auge (10A, 10B), qui fait face au panneau (6) d'échange de chaleur,

**caractérisé en ce qu'**un intérieur de l'auge (10A, 10B) est cloisonné par une pluralité de plaques (20) de chicanage en une pluralité de sections (21) d'alimentation en eau, qui sont agencées horizontalement dans une direction longitudinale de l'auge (10A, 10B),

la hauteur de la pluralité de plaques (20) de chicanage est fixée à une hauteur, qui est plus basse qu'une surface du fluide (W) de milieu de chauffage dans l'auge (10A, 10B), lorsque l'auge (10A, 10B) n'est pas basculée et

dans lequel le vaporisateur (1) de gaz liquéfié comprend, en outre, une buse (23) de distribution d'eau pour distribuer également le fluide (W) de milieu de chauffage à la pluralité de sections (21) d'alimentation en eau.

2. Vaporisateur (1) de gaz liquéfié suivant la revendication 1, dans lequel, lorsqu'une distance horizontale entre la partie (18a) de bord, qui fait face au panneau (6) d'échange de chaleur, et la partie (18b) de bord, qui ne fait pas face au panneau (6) d'échange de chaleur, est C, lorsqu'un angle de basculement maximum du vaporisateur de gaz liquéfié dans la direction C est θ, lorsque la hauteur verticale de la plaque (11) de fond à la partie (18a) de bord, qui fait face au panneau (6) d'échange de chaleur, est L1 et lorsque la hauteur verticale de la plaque (11) de fond à la partie (18b) de bord, qui ne fait pas face au panneau (6) d'échange de chaleur, est L2, L1 et L2 sont fixés de manière à satisfaire l'expression suivante :

$$L2 - L1 \geq C \cdot \tan\theta.$$

3. Vaporisateur (1) de gaz liquéfié suivant la revendication 1 ou 2, dans lequel la buse (23) de distribution d'eau a une forme de conduit, qui traverse la pluralité de sections (21) d'alimentation en eau, de manière à s'étendre dans la direction longitudinale de l'auge (10A, 10B), et qui a des orifices (23a) d'alimentation en eau, qui débouchent respectivement à l'intérieur des sections (21) individuelles d'alimentation en eau.

4. Vaporisateur (1) de gaz liquéfié suivant la revendication 3, dans lequel la buse (23) de distribution d'eau passe à travers les plaques (20) de chicanage en dessous de la surface du fluide (W) de milieu de chauffage dans l'auge (10A, 10B), lorsque l'auge (10A, 10B) n'est pas basculée.

**5.** Vaporisateur (1) de gaz liquéfié suivant l'une quelconque des revendications 1 à 4, dans lequel deux des ouvertures (18) de débordement, pour faire individuellement que le fluide (W) de milieu de chauffage s'écoule sur chacun de deux panneaux (6) d'échange de chaleur, qui se font face l'un à l'autre, sont disposées au voisinage l'une de l'autre dans l'auge (10A, 10B) montée entre les deux panneaux (6) d'échange, qui se font face l'un à l'autre, une plaque (14) de cloisonnement, qui cloisonne les deux ouvertures (18) de débordement, est prévue et une partie (18b) de bord de sommet de la plaque (14) de cloisonnement est la partie (18b) de bord, qui ne fait pas face au panneau (6) d'échange de chaleur et qui est partagée par les deux ouvertures (18) de débordement.

**6.** Bateau équipé d'un vaporisateur (1) de gaz liquéfié configuré suivant l'une quelconque des revendications 1 à 5.

# FIG. 1

# FIG. 2

(A)

(B)

# FIG. 3

EP 2 865 590 B1

# FIG. 4

# FIG. 5

10A, 10B

SEAWATER

# FIG. 6

(A)

(B)

EP 2 865 590 B1

**EP 2 865 590 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011112294 A
- JP H0534460 U
- US 6253571 B1
- US 20060288711 A1